# EUROPEAN PATENT APPLICATION

(11) **EP 0 561 649 A2**
(43) Date of publication of application: **22.09.1993**
(21) Application number: 93302107.3
(22) Date of filing: 19.03.1993
(51) Int. Cl.: H04L 12/18, H04M 3/56

(54) **Electronic conference system**

(30) Priority: 19.03.1992 JP 64054/92
(71) Applicant: FUJITSU LIMITED, Kawasaki-shi, Kanagawa 211 (JP)
(72) Inventor: Kamakura, Akira, c/o Fujitsu Limited, Kawasaki-shi, Kanagawa 211 (JP)
(74) Representative: Stebbing, Timothy Charles

(57) **Abstract**

An electronic conference system for storing in a file in a computer system messages of a plurality of participants in a conference and operating the conference in a message storing and exchanging method by obtaining the contents of the stored messages from a plurality of terminals. The system comprises a control information storing unit for storing message link information which is inputted when storing the messages and indicates that a linked-from message is associated with more than one existing linked-to message, and a read control unit for reading the messages according to the message link information stored in the control information storing unit. A message is linked to another message by using a message identifier. The linked-from message comprises a summary message for summarizing a plurality of existing liked-to message.

## Description

### Background of the Invention

### Field of the Invention

The present invention relates to an electronic conference system for supporting communications among a plurality of users over computer systems, and more specifically to an electronic conference system for controlling the posting activities and accumulation messages of participants, the permission for the access to the messages, and the computations over the registered data items, etc.

Data transmission technologies have made remarkable progress based on the development of computer systems, which has made it popular for data to be transmitted between a computer and terminal units through communication lines, and the terminal units issue instructions to remote computers. Recently, as personal computers become more and more popular they have often been used as terminal units in conducting computer communications.

With the development of the technologies as described above, electronic conference systems have been developed and realized such that a conference involving a plurality of users is managed by a computer, information from user terminals is stored in the files of the computer, and the information is outputted and displayed on the terminal units according to the instructions from the user terminals.

### Description of the Prior Art

The above described electronic conference system is applied as follows. For example, a user participating in a conference, that is, a participant, registers his presence. A registered participant of a conference managed by an electronic conference system can post his own messages made during the conference, comments and opinions on other participants' messages, etc. only by logging in to the electronic conference system. After a first participant posts a comment or opinion in an electronic conference system, a second participant reads the first participant's posted comment or opinion through a display, and posts his own comment and opinion in the electronic conference system. Thus, the conference is operated. There are electronic conference systems allowing any users to freely participate in a conference where they are free to post their opinions.

The posting activities of comments and opinions, etc. are controlled using participant identifiers issued on registration for the conference and/or user numbers of the computer system already assigned to the participants. When a comment on an existing message is posted, the message number assigned to the message must be designated, the link-data between the messages are obtained, and each message is provided with the information.
After the posting, a linked-to message is read by obtaining a relation with the linked-to message according to the relation to the information indicating the link, that is, the link information, or a linked-from message is read after obtaining a relation with the linked-from message likewise. The linked-to message means a message provided at a point at which a link from a noted message ends and the linked-from message means a message provided at a point at which a link-to a noted message starts.

On the other hand, votes are sometimes required from participants during the process of an electronic conference. In this case, each participant posts a message indicating yes or no. When the messages from all participants, each indicating yes or no, have been posted, the contents of the message file is viewed by a participant such as a chairman to obtain the result. Or, a voting is conducted by preparing an enquête system, for example, separately from the electric conference system.

In the electronic conference system, all postings can be viewed by any participant. However, this system cannot be used if a conference involves messages not to be revealed to some of the participants. Therefore, conventional technologies add to the above described system the function of preventing a message with an unique participant identifier from being displayed by a normal reading operation. That is, each participant identifier is assigned a permission or restriction for reading a message so as to strictly determine the possibility of communications among participants.

In the prior art technology, a linked-to message is read according to linked-from message information using the above described link information, or a linked-from message is read according to linked-to message information. However, there are no units in the system for storing the information that a new message relates to a plurality of existing messages. Therefore, a message is inconveniently processed as a comment on only one of the existing messages in the system although it actually relates to a plurality of them.

Although the number of messages posted increases with the proceeding of the discussion in a common electronic conference, there have been no units in conventional electronic conference systems for integrally managing the accumulated messages. Therefore, messages not required from the view of the process of a conference or some harmful messages can be read unless they are deleted. Accordingly, it is not easy for participants joining the conference from the beginning and those joining it midway to grasp the latest state of the conference. Thus, there have been a number of inconvenient points in proceeding with a conference where a lot of arguments are expected to come to a conclusion.

Furthermore, if participants' votes are required on a object during a conference with the conventional electronic conference systems, then each of the participants must post in the conference a message indicating yes or no. Therefore, as many messages as there are participants have to be newly posted. As a result, when the number of participants is very large, the essential function of the electronic conference room is obstructed, and there arises the problem of laborious vote count. Additionally, if each participant cannot post a message without his own identifier, then a secret vote is not possible because each vote is registered as a message with an identification name. Even if a voting system is provided separately from the electronic conference, the vote cannot be associated with a designated point in the process of a conference because it is not used during the electronic conference.

Conventionally, the permission or restriction for reading a message must be determined individually for each participant identifier so as to strictly control the permission or restriction for communications among participants in an electronic conference. However, it has been impossible in principle to preliminarily define a practical type of group communication to be made in a conference before all participants are exactly determined.

Furthermore, since each participants uses a participant identifier corresponding one-to-one to a participant, reading of a message by two participants in a conference corresponds one-to-one individually, and it has been impossible to select a different relationship for each purpose each time a message is posted. For example, there are various types of group communications. In addition to a common electronic conference easily managed by a conventional technology in which all participants equally post and read messages, there is the example of a debate, in which a lot of arguments are generated between supporters and opponents, which is a form of conference not realized by prior art technologies. The conventional technologies have no methods of integrating and managing all types of conference.

### Summary of the Invention

The present invention relates to an electronic conference system in which a plurality of participants store their messages in a file in a computer system, read the contents of the stored messages, and proceed with an electronic conference according to the well-known message storing and exchanging method.

The present invention aims at realizing an electronic conference system for effectively and efficiently proceeding with discussions, processing data for secret votes and personal researches, automatically obtaining the processing result as a message, and having a discussion in various patterns of group communications.

The present invention comprises a control information storing unit for storing message link information, which is inputted when a message is posted and indicates that the message is associated with more than one existing message, control information indicating that a message is a program, and control of storage and reading of messages as attributes information; and a read control unit for reading the messages, executing a program when an instruction to read a message that is a program is given, and controlling the storage and reading of messages according to the attribute information.

### Brief Description of the Drawings

Figure 1 shows the system configuration of the embodiment of the present invention;
Figures 2A to 2C are the configuration information tables;
Figure 3 shows links among messages;
Figure 4 is a first process flowchart of the embodiment of the present invention;
Figure 5 is a flowchart of the process of posting a message;
Figure 6 is a flowchart of the process of reading a linked-to message;
Figure 7 is a flowchart of the process of reading a linked-from message;
Figure 8 is a flowchart of the process of reading a message;
Figure 9 is a flowchart of the process of reading a linked-to message;
Figure 10 is a flowchart of the process of compulsorily reading a message;
Figure 11 is a flowchart of the process of posting a program;
Figure 12 is a flowchart of the process of executing a data input command;
Figure 13 is a flowchart of executing a read command;
Figure 14 is a flowchart of the process of positing a state variable;
Figure 15 is another flowchart of the process of positing a state variable;
Figure 16 is a flowchart of the process of executing a read command;
Figure 17 is a result table of totals;
Figure 18 is a flowchart of the operation performed when attributes i.e. masks are controlled;
Figure 19 is the control information table used when an electronic conference is operated as a debate; and
Figure 20 is the control information table used when an electronic conference is operated as a school class.

### Description of the preferred embodiments

The present invention is explained in detail by referring to the attached drawings.

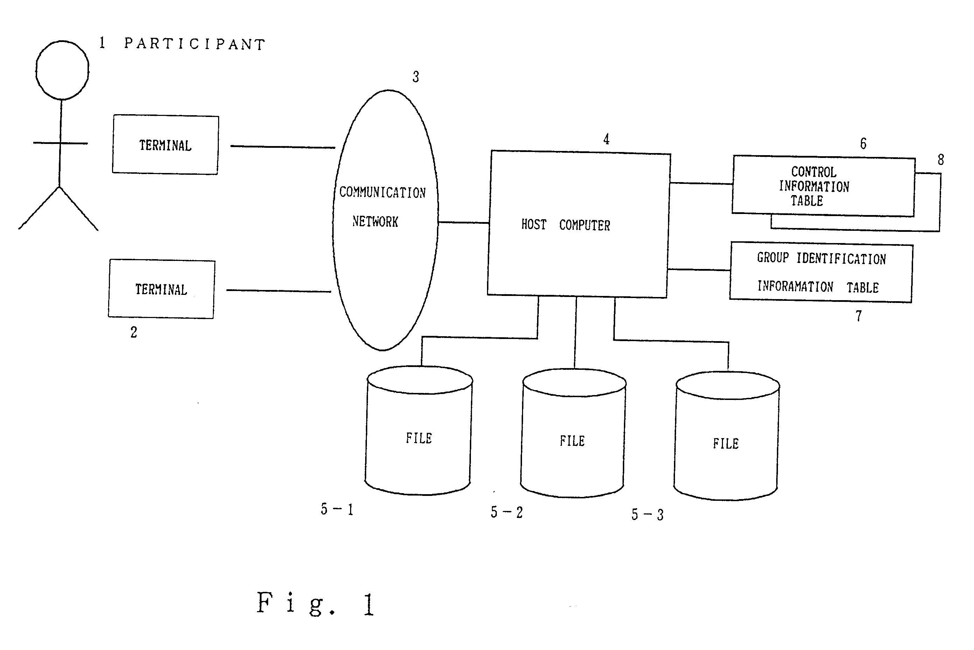

Figure 1 shows a system configuration of an embodiment of the present invention.

In Figure 1, 1 is a participant in a conference.

A terminal unit 2 is used by a participant in a conference in writing a message and reading another participant's message.

3 is a communication network.

A host computer (hereafter referred to as a host for short) controls the posting and reading of messages in an electronic conference.

Files (storage units) 5-1 and 5-2 store messages from the terminals 2 and state variables. 5-3 is a system file used by the system and temporary work file.

A control information table 6 shows the links between existing message files containing posted data from terminals and data sent to the terminals, information of summaries, and the information showing that stored messages are programs. Each piece of the information is read from an area added to each message and set each time a message to be accessed is updated.

A group identification information table 7 is used to show to which group a participant of an electronic conference belongs. A control information table 8 contains the selection of attributes used by groups of users (participants) when each of them posts a message, and the information as to whether or not a message identified by an attribute can be read by a specified group. When a plurality of electronic conferences (electronic conference services) are provided in an electronic conference system, a control information table 8 and a group identification information table 7 are assigned for each electronic conference. The control information tables 6 and 8 and the group identification information table 7 can be provided in a memory within the host 4 or in an auxiliary storage unit.

The system configuration shown in Figure 1 shows a typical personal computer communication system, and an electronic conference service is regarded as a service in personal computer communications. Obviously, it is not limited to this application, but any hardware configuration will do as long as an electronic conference service can be appropriately provided by transmitting data between a host and terminals, and the host comprises the files (storage units) 5-1 through 5-3 for storing messages, the control information table 6 used by the host 4 in controlling writing and reading of messages, and the group identification information table 7.

The operation of the system is explained below. The participant 1 calls the host by operating the terminal 2, and selects an electronic conference according to a service of the system. Then, the participant 1 selects one of the conference provided in the electronic conference services according to the information, etc. transmitted by the host to the terminal. According to the selection, the host 4 acknowledges the participant's taking part in the specified electronic conference.

The acknowledgement by the host 4 guarantees the participant the access to a message file. For example, the participant is permitted to post a comment or original contribution as a message, and read a message of another participant.

The participant 1 posts a new message, that is, a summary of a plurality of messages already posted in the current conference after specifying as a list of message numbers a message group to be summarized. Thus, file 5-1 stores as control information the text and the title of the message, and a number list of a linked-to i.e. link destination message group associated with the new linked-from i.e. link source message and the information indicating the link and the summary. Likewise, if the link refers to multiple comments, then the file stores the text, the title, the semantic information, and the linked-to message number list.

The system according to the embodiment of the present invention has the functions of providing multiple comments, issuing a summary, aggregating data, and controlling attributes. The function of providing multiple comments is to allow a comment to be associated with a plurality of existing messages. For example, it includes pointing out similarities and differences of a new messages to a plurality of existing messages, proposing the integration and division of arguments, collectively representing support or objection, citing references, etc., and preparing a general comment on a plurality of messages if they are issued by one author.

The function of preparing a summary message is to generate a new message summarizing a plurality of existing messages, and to automatically set control information such that the summarized messages are excluded from the objects to be read by normal operations. For example, if a participant can be free to post messages, the summary function summarizes the messages as one summary message, and if the argument has diverged and become a plurality of arguments, then the function generates a plurality of summary messages to summarize the separate arguments, thereby consolidating the conference and provides the conference with a new base of further logic, reduces the existing speeches to the smallest possible number by picking up the summaries so that participants joining midway can keep up with the current argument, and invites a decision maker in the conference after summarizing various arguments, thereby to obtain new summaries.

The aggregate function gathers message information from participants.

The attribute control function is such that all participants in a group communication post and read messages using their own attribute identifiers to realize communications in group units in various manners.

The associated functions and operations are explained in detail by referring to the operations of the embodiments of the present invention.

When the participant 1 posts a new message as a summary of a plurality of messages already stored in a conference, the message group involved in the summary is designated and posted by referring to a message identification number list. According to the designation, the identification number list of a linked-to message group having the messages as linked-from messages in addition to the texts and titles of the messages, and the information indicating that the link means a summarization are stored as the control information in the file 5. Likewise, if the link means a multiple commentary, the information indicating a linked-to number list are stored in addition to the texts and titles, etc.

When the participants 1 specifies, using a message number, etc., a message already posted in the conference according to the normal reading operation, the control information corresponding to the message is read by the host 4 from file 5-1 and set in the control information table 6. Next, the host 4 refers to the control information in the control information table 6, accepts a read request, reads specified messages, and outputs them to the terminal 2, if the current message is an ordinary message. It rejects a request for a read if summary message is linked to the current message. As a result, the message seems to the participant 1 as if it did not exist at all.

Immediately after the linked-from message of a summary message is read, linked-to message numbers are obtained by referring to the control information in the control information table 6 if the participant 1 specifies a read of the messages to which the current message is to be linked, and the entire message group is read or a part of it is selected and read.

A similar operation is performed immediately after a linked-from message of multiple-reference comments is read. When the participant 1 requests the host 4 to read a message from which the current message is linked immediately after a linked-to message of multiple-reference comments is read, linked-from message numbers are obtained by referring to the control information 6, and the entire message group is read or a part of it is selected and read.

When a message is preliminarily informed as a summary message, the participant 1 can issue a request to read summarized message group by specifying the numbers of the current summary message without reading the current summary message itself. In this case, only the control information is read from file 5-1 without reading the text of the current message, and the entire linked-to message group is read or a part of it is selected and read according to the control information.

Immediately after one of the linked-to messages is displayed, the control information of the current message is set in the control information table 6. Therefore, if the current message is further linked to another linked-to message the linked-to message is read.

The control information table 6 stores link information associated with the current message when it is read or updated. The link information is transferred from file 50-1 to the control information table each time the above described read or update is performed.

As described above, the system according to the embodiment of the present invention performs each process based on the current state. The process is by no means limited to the above described processes. The contents of the processes are explained below in further detail.

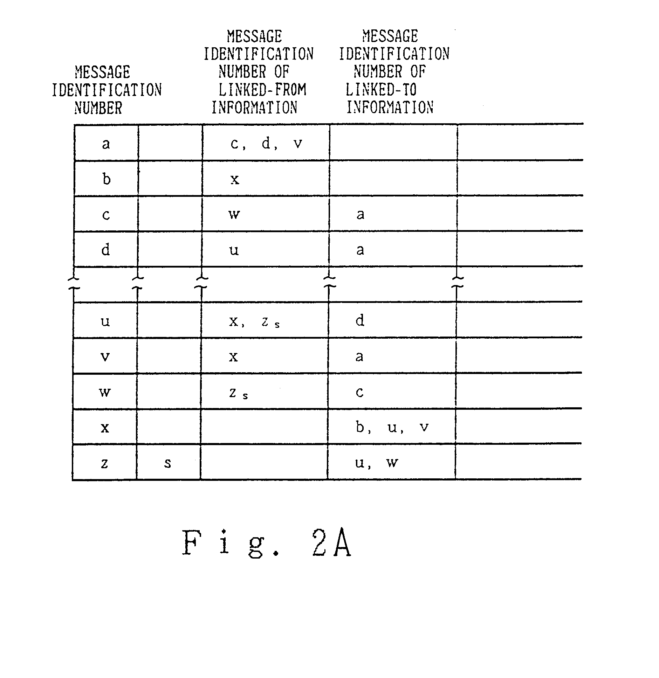

Figure 2A is a control information table showing in detail the control information table 6 associated with the multiple-comment function and the summary message function. In the embodiment of the present invention, a message identification number is appended on each time a message is posted, and messages are managed using the message identification numbers assigned individually. Although no shown in Figure 2A, the linked-to and linked-from message information, a registration ID of a participant, a posting date, etc. corresponding to the message identification number are stored. Figure 2A shows all the links in duplicate in the table to indicate the links of messages a through *z* individually. However, in the control information table 6, one piece of link information is temporarily stored corresponding to a message to be accessed.

In Figure 2A, the message having the message identification number a is linked from messages having the message identification numbers *c*, *d*, and *v*. The message having the message identification number *b* is linked from the message having the message identification number *x*. The message having the message identification number *c* is linked from the message having the identification number *w*, and linked to the message having the message identification number *a*. The message having the message identification number *d* is linked from the message having the identification number *u*, and linked to the message having the message identification number *a*. The message having the message identification number *u* is linked from the messages having the message identification number *x* and *z*_{*s*}, and linked to the message having the message identification number *d*. The message having the message identification number *v* is linked from the message having the message identification number *x*, and linked to the message having the message identification number *a*. The message having the message identification number *w* is linked from the message having the message identification number *z*_{*s*}, and linked to the message having the message identification number *c*. The message having the message identification number *x* is linked to the messages having the message identification numbers *b*, *u*, and *v*. The message having identification number *z*_{*s*} is linked to the messages having the message identification numbers *u* and *w*.

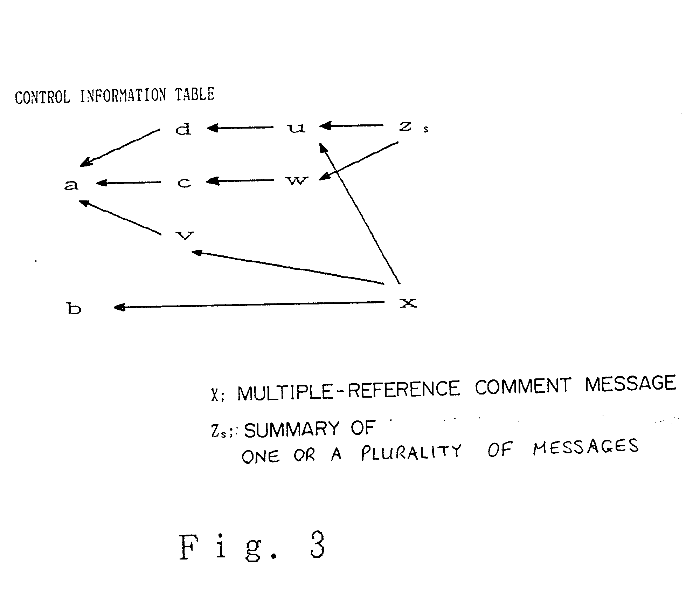

That is, as shown by the view for explaining the links in Figure 3, the messages having the message identification numbers *d*, *c*, and *v* refer to the message having the message identification number *a* to make a comment. The message having the message identification number *u* refers to the message having the message identification number d to make a comment. The messages having the message identification numbers *x* and *z*_{*s*} refer to the message having the message identification number *u* make a comment, etc. The message having the message identification number *w* refers to the message identification number *c*. The message having the message identification number *z*_{*s*} refers to the message having the message identification number *w*. The message having the message identification number *x* refers to the messages having the message identification numbers *v* and *b*.

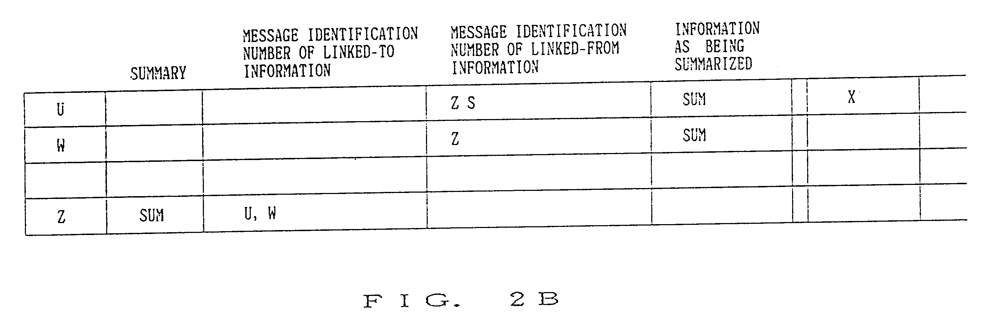

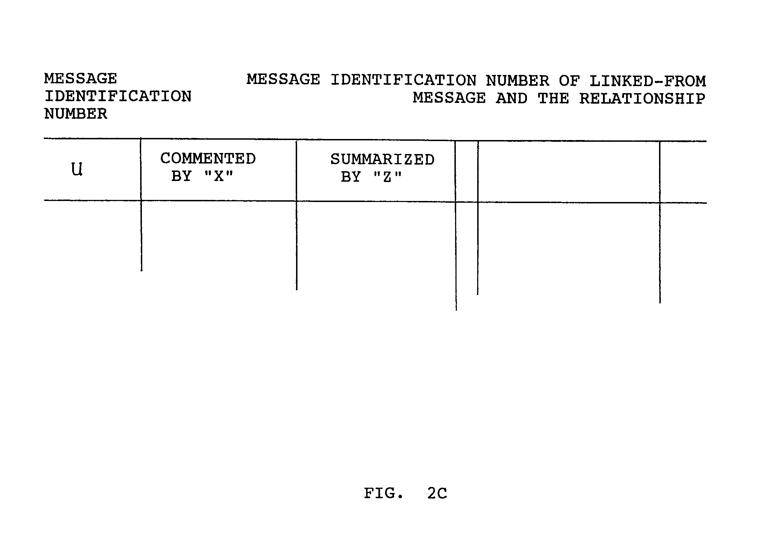

In Figure 2A, the message having the message identification number *z*_{*s*} indicates summary speech information of the messages having the message identification numbers *u* and *w*. When a comment on the message having the message identification number *u* is read, the contents of the message having the identification number *u* cannot be viewed, but the summary can be checked. Figures 2B and 2C are tables indicating the relationships among messages. The above described summary is controlled in accordance with control information. The messages having the message identification numbers *u* and *w* are summarized by the message having the message identification number *z*. The control information on the messages having the message identification numbers *a* and *w* contains "sum" for summary and the linked-from information message identification number *z*. The message identification number *u* is commented by the message having the message identification number *x*. The control information on the message identification number *z* contains a summary flag "sum" and the message identification numbers *u* and *w* in the link destination column indicating the link destination. Figure 2C shows the control information on the message identification number *u*. The information contains a message identification number as the link destination information, and, in the relationship column, the comment from the message having the message identification number *x* and the information that the present message is summarized by the message having the message identification number *z*. This is limited to the case where the contents of the view are limited to the summary. Otherwise, all the contents of the message having the message identification number *z* can be accessed. As described above, the control information is stored in the control information table as link information for each message. For example, a table of messages containing messages and comments for each participant and the correspondence of a message to another message is prepared according to the above described link information so that the process of the conference can be informed immediately when these data are read by users.

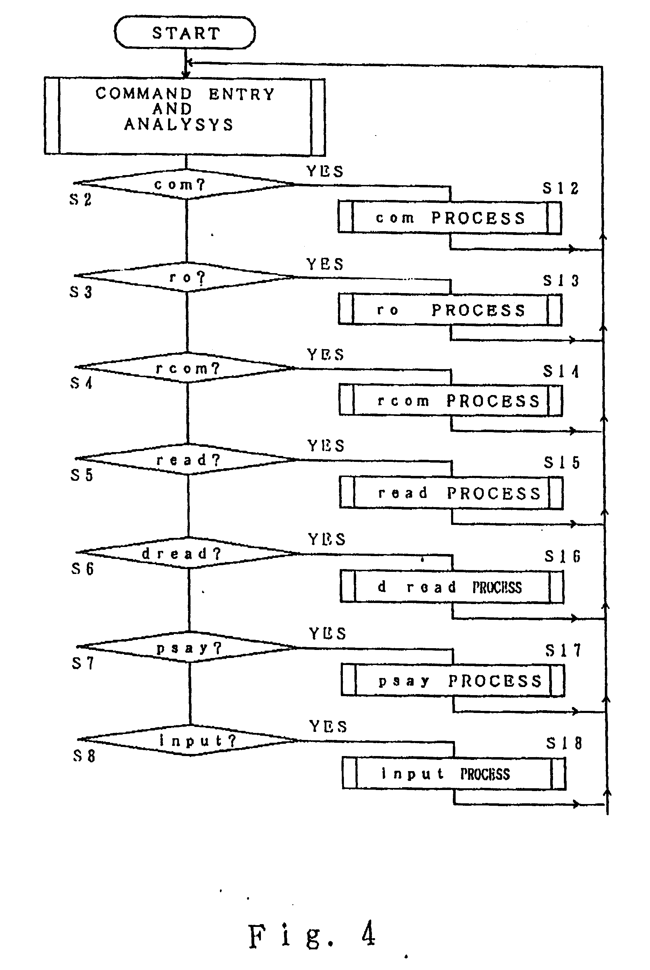

The embodiment of the present invention supports a command issued through a terminal to the host computer 4. The host computer executes the process of the first flowchart of the embodiment of the present invention shown in Figure 4, when the participant 1 issues a request for entering an electronic conference through the terminal 2.

When the host computer 4 executes the process shown in Figure 4, a command inputted through a terminal in response to the prompt is analyzed in step S1. the result of the analysis of the inputted command is determined in the following steps: whether or not it indicates com (comment) in step S2; whether or not it indicates ro (read original) in steps S3; whether or not it indicates room (read comment) in step S4; whether or not it indicates read in step S5; whether or not it indicate dread in step S6; whether or not it indicates psay (program posting) in step S7; and whether or not it indicates input in step S8. Additionally, the embodiment of the present invention provides various utilities such as commands for use in an electronic conference. In step S8 and the following steps, each of these commands are detected.

If it is determined that a com command is imputted (yes in step S11), com process is performed in step S12. A com process is a message posting process associated with a one-to-multiple message link. If "com x, y, z" is inputted, it indicates a multiple-reference comment message to be linked to existing messages x, y, and z.

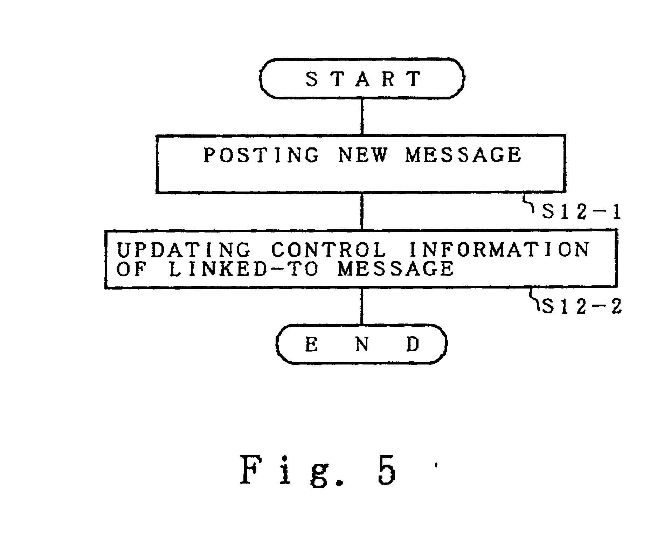

Figure 5 is a flowchart of a message posting process. When an execute command is inputted for this process, a new message posting process is performed n step S12-1. The text of a message is stored in file 5-1 in this process, and the linked-to message information (message identification numbers and types of links) is added as control information to the text of the message in file 5-1.

Next, in step S12-2, the control information of linked-to messages is updated. The update is a process of adding linked-from message information (message identification numbers and types of links) as control information to the link information of each linked-to message. The control information is stored in the control information table 6. Then, the entire process of step S12-1 is completed. According to the posting, a speech becomes linked from the multiple existing messages.

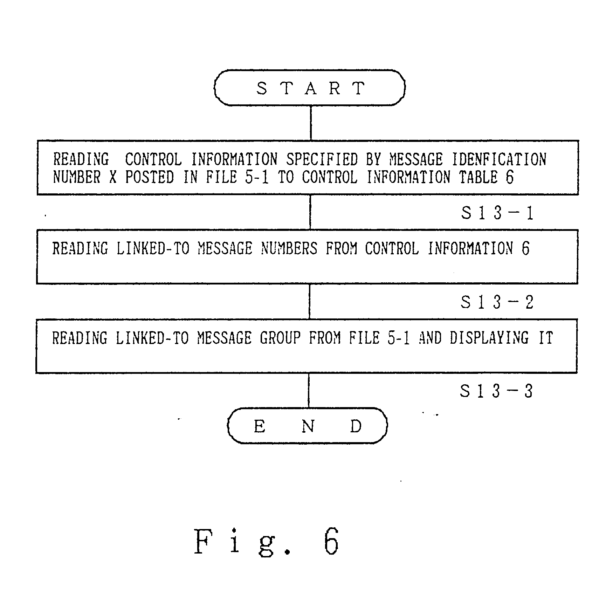

If it is determined that a ro command is inputted in step S3, a process of reading a linked-to message through a linked-from message is performed. For example, the command represented as "ro x" is a command to read a plurality of messages referred to by the message having the message identification number x. Figure 6 is a flowchart of a process of reading a linked-to message. When the process is executed, the control information of the message x registered in file 5-1 is read to the control information table 6 in step S13-1. Then, in step S13-2, linked-to message numbers are read from the control information table. In step S13-3 a linked-to message group is read from file 5-1 according to the linked-to message numbers, and then displayed.

In the embodiment of the present invention, these messages are not displayed simultaneously. That is, if there are a plurality of linked messages, then the titles of the comments are displayed first. If there are no titles, the leading lines are displayed, and then the remaining lines are displayed when specified by the operator 1.

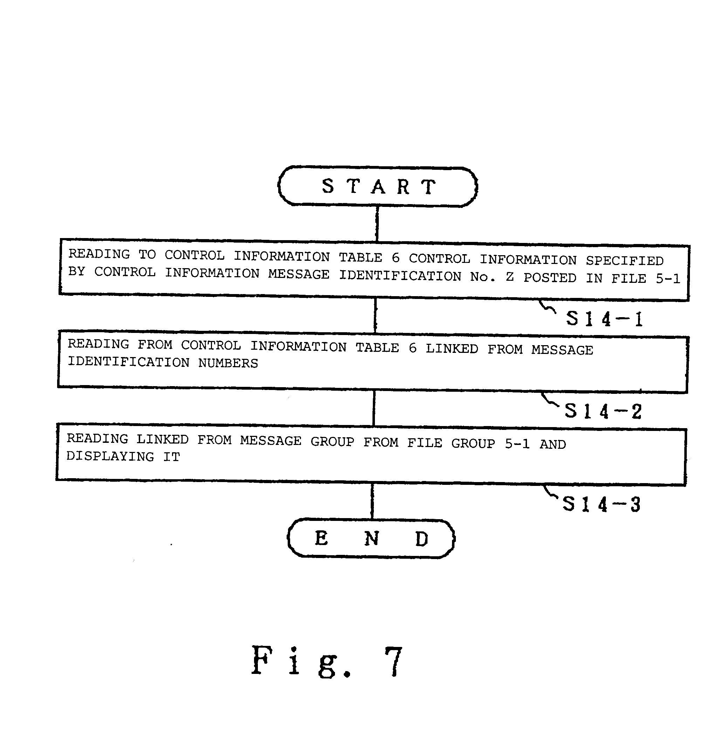

If it is determined that an rcom command is inputted in step S4, the rcom process is performed in step S14. In the rcom process, a linked-from message is read through its linked-to message. For example, when "rcom z" is inputted, a plurality of linked-from messages commenting on the message having the message identification number z are read. Figure 7 is a flowchart of a process of reading a linked-from message. When this process is started, the control information of, for example, the message having the message identification number z stored in file 5-1 is read to the control information table 6 in step S14-1. Then, in step S14-2, a linked-from message number is read from the control information table 6. Then, a group of linked-from messages are read from file 5-1 and displayed. They are displayed as in step S13-3.

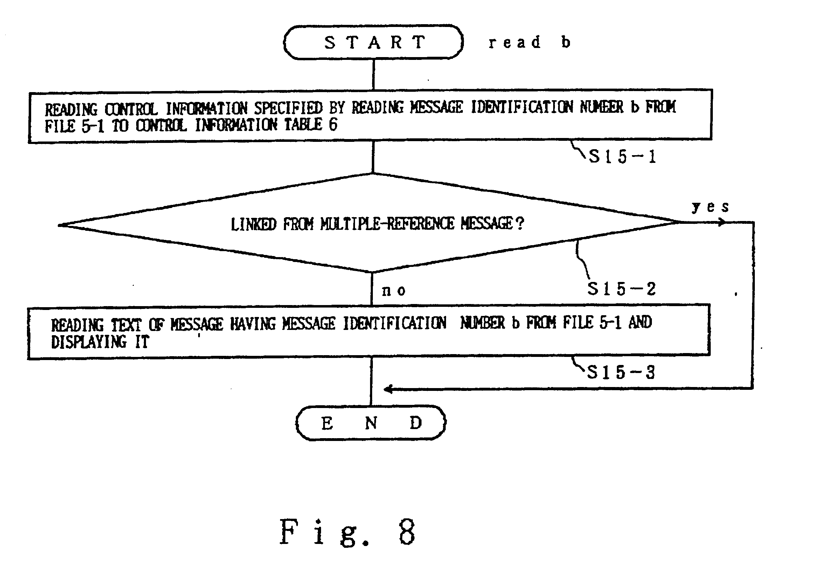

In step S5, if it is determined that a read command is inputted (yes), the read process in step S15, that is, a message reading process, is performed. Figure 8 is a flowchart of a process of reading a massage. The reading process performed in step S15 restricts the reading from a plurality of messages linked from a message. For example, as shown in Figure 3, if the messages having the message identification numbers u, v and b are linked from the message having the message identification number x, then a process of reading one of the messages is prevented. "read b" indicates a process of reading the message with identification number b.

When the process is performed, the control information of the message having the message identification number b is read from file 5-1 to the control information table 6 in step S15-1. Then, in step S15-2, it is determined whether of not the message having the message identification number b is linked from a plurality of messages. If yes, the message is not displayed and the process is terminated. If no, the message having the message identification number b is read from file 5-1 and displayed in step S15-3. Then, the process in step S15 is terminated.

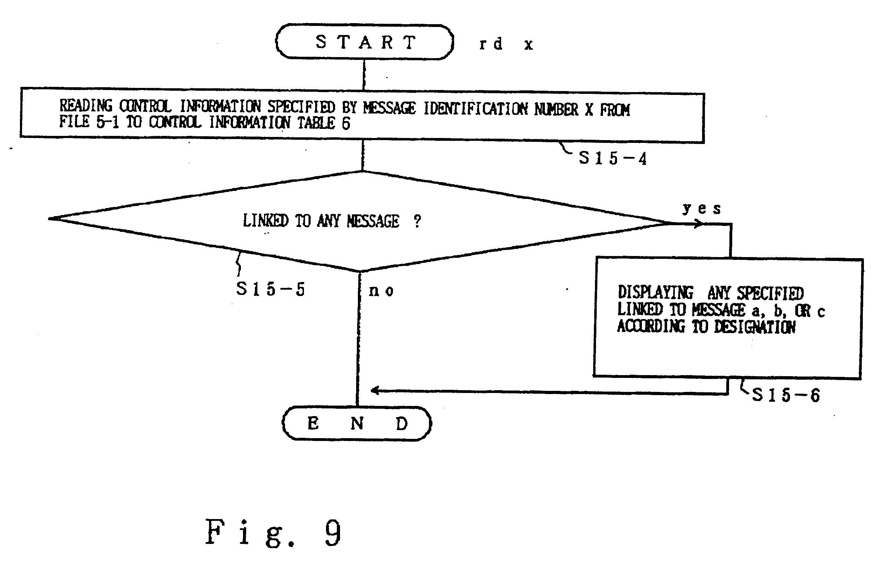

The above described read process displays a message if the message is independent or linked from only the independent message, and does not display it if it is linked from a message as one of a number of messages, or vice versa. Figure 9 is a flowchart of a process of reading a linked-to message. For example, when an "rd x" command is imputted, the control information of the message having the message identification number x is read from file 5-1 to the control information table 6 in step S15-4. Then, it is determined according to the identification information in step S15-5 whether or not a message having the message identification number x is linked to any message. If no, the process is terminated. That is, if a message with a specified message number is independent, the process is terminated. If the specified message is linked to another message, it is displayed in step S15-6.

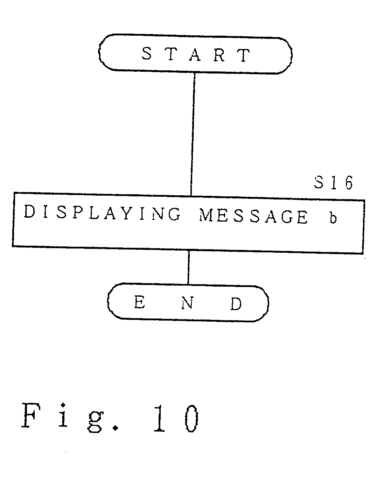

According to each of the commands described above, messages can be read as limited depending on a specific purpose. The present invention is not limited to this application. For example, a "dread b" command compulsorily reads the message having the message identification number b. Figure 10 is a flowchart of a process of compulsorily reading a message in the embodiment of the present invention. When the command is inputted, the message b is read and displayed in step S16.

Although the word "message" is used in the embodiment of the present invention as described above, it can be replaced with "summary". In this case, a flag is set as shown if Figure 2A. If a flag s is added, a summary is outputted. In each process, a summary can be recognized by the setting of flag. In step S16, in which a specified message is compulsorily displayed, the message or a summary is negated, that is, displayed unconditionally.

Based on the above described commands, messages having various states and links can be managed and displayed.

In the embodiment of the present invention, a message simulation program for generating as a message written on a voting from the explanatory text for a secret vote or a set of items one of which is to b selected by a voter posted to the conference. If a reading process is performed on the program as if it were an ordinary message, the program is executed. When the program is executed, the explanation text for the current subjects, voting items, the current aggregate of the votes, and the aggregate for each item are displayed as if they were ordinary messages. Since these descriptions can also be associated with comment messages, they are almost the same as normal messages in function.

When a participant inputs a specific command "v" (vote) immediately after the message is read, a voting process starts, an explanatory text of the subject is displayed, and a set of items one of which is selected by a voter are displayed. If a voter who has finished his voting tries to vote again through his terminal, it is rejected as an illegal double vote. That is, the voting record is updated each time a voting form message is read.

The voting form message described above can be prepared and posted by a participant through a command different from one used for registering a normal message. At his time, depending on the purpose of the current vote, the voting record of each item is displayed before or after the closing time.

A posted voting form message rejects any voting after an author has closed the vote, and is converted to a normal message indicating the current voting record. The vote can only be closed by an author.

A voting process involves the voting of many participants. However, it can be managed by preparing a single voting form message. Additionally, the voting result can also be discussed in an electronic conference.

The voting operation is further described in detail by referring to Figures 2A through 2C, and 11 through 13 as follows.

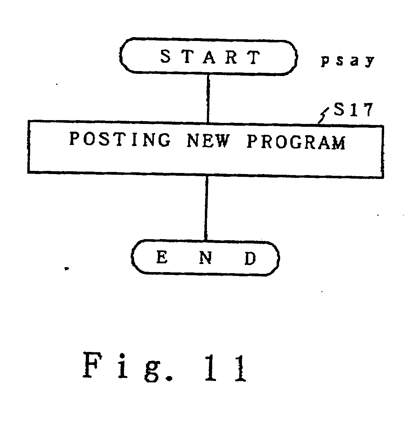

If a psay command is determined in step S7, a psay process shown in Figure 11, that is, a new program registration process, is performed in step S17. The process receives a file of a program from a terminal and a host computer, and stores it in file 5-1. In registering the file, the control information stores the fact that the message is a program. For example, the program can be a source program for an interpreter, or a directly executable program.

The registration is prepared according to the rules predetermined as follows. According to the first rule, the program must be operated in the data input mode or the message simulation mode. In the data input mode, the value of a state variable is changed, that is, updated, while, in the message simulation mode, a message is generated by referring to the state variable. For example, this is embodied as an aggregate program. That is, a state variable is set individually by a participant. For example, support, objection or other various items are presented for selection by the voter. If a voter selects "support", the state variable indicating "support" is incremented. The aggregate of messages are outputted as a message by referring to the state variable in the message simulation mode program.According to the second rule, the state variable is generated in file 5-2. According to the third rule, the result of the above described message simulation is registered in file 5-1 as a message. The result can also be stored as a message in the area where the message simulation program is stored according to the third rule. Summing us, a program is executed in a data input mode at the voting and changes the value of the state variable. Accordingly, a preparing messages, for example "support" in noting and a chairman's troublesome job of aggregating such messages, can be removed.

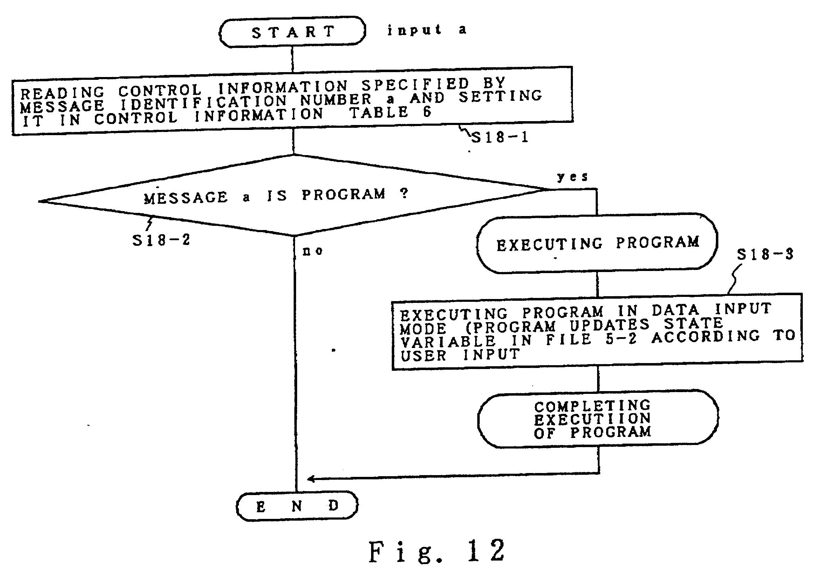

If a new program, that is, a data input mode program for updating a state variable, and a message simulation mode program for referring to the state variable and generating a message are posted, an integral aggregating process can be performed. In order to execute the program, a command such as "input a", etc. is inputted. When the command is inputted, it is detected in step S18-1, and an input process is performed in step S18. In the input process, a program registered at the position specified by message number a is executed in the data input mode. Figure 12 is a flowchart of a process performed in the input mode. When an execute command is received in the data input mode. when an execute command is received in the data input mode, a control information number specified by a message identification number is read in step S18-1, and the process set in the control information table 6 is performed. It is determined in step S18-2 whether or not the control information set in the control information table 6 is a program. If no, the process is terminated without any action.

If yes, the program is executed in the data input mode in step S18-2, and the value of the state variable in file 5-2 is updated according to the data inputted by the user. This registers the state variable for use in the aggregate performed by each participant. The state variable is stored in the state variable area 5-2, and can be stored in another file.

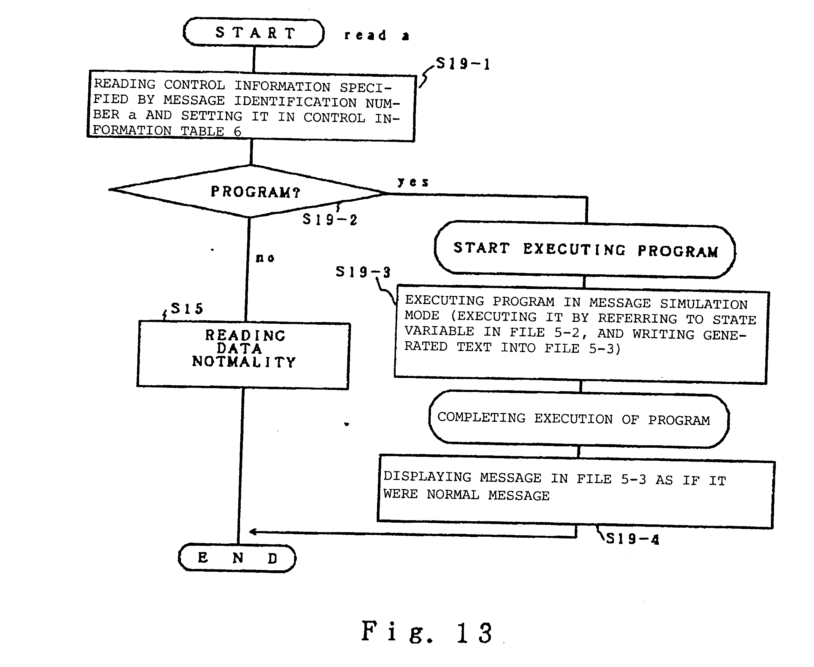

If the program is executed in the message simulation mode, it is executed using a read command, etc. Figure 13 is a flowchart of the execution using a read command. That is, a program cannot be executed in the message simulation mode in the above described process in step S19 shown in Figure 13. The process shown in Figure 13 is composed of the normal read process in step S15 shown in Figure 8 and the process in step S19-1 through S19-4. If a read command is inputted to execute the program, it is detected in step S5, and the process of Figure 13 is started. First, in step S29-1, the control information specified by the message identification number a is read in step S19-1, and set in the control information table 6. Then, it is determined in step S19-2 whether or not the control information specified by the message identification number a indicates a program. If no, a normal process is performed. That is, the normal read process in step S15 is performed and then terminated. If yes, a stored program is executed in the message simulation mode by referring to the value of the state variable in file 5-2, and the generated text is written in file 5-3. Then, file 5-3 is displayed in step S19-4 as if it were a normal message. As described above, the result of execution of the program in simulation mode is stored in file 5-3 as message information. It can also be stored in file 5-1, after assigning a new message identification number, as message information.

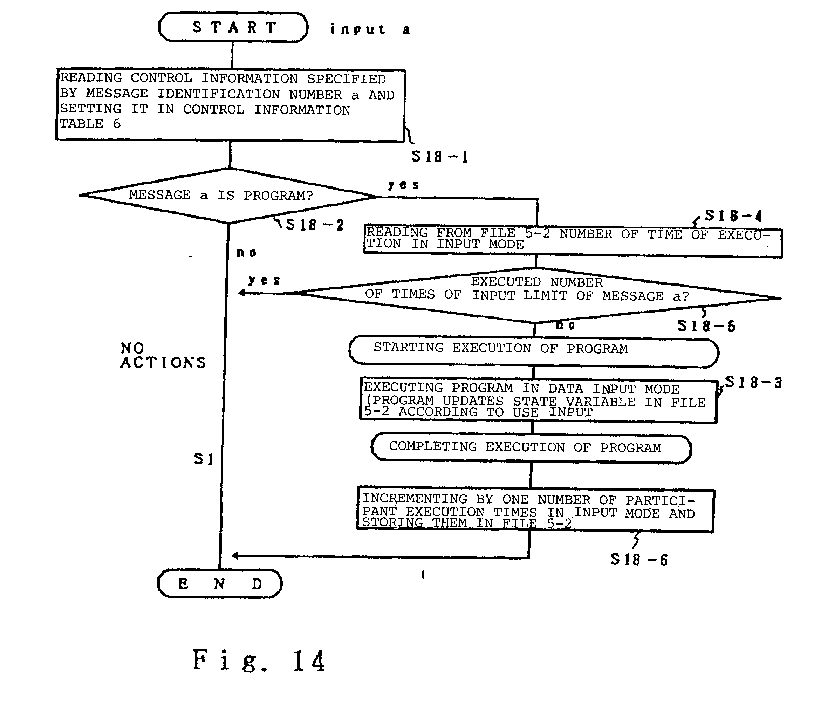

As described above, a program stored at the position of message a is executed in the data input mode using an input command. Obviously, the present invention is not limited to this application. For example, the present invention has the capability of storing the identifier of a participant who executes a program in the data input mode so that the number of times that the program is executed can be limited. Figure 14 is a flowchart of the state variable posting process including the limitation on the number of times, that is, of the process of the execution of a program in the data input mode. If "input a" is inputted and an input process is performed, then the control information of the message having the message identification number a is read in step S18-1, and set in the control information table 6. Then, it is determined in step S18-2 whether or not the message having the message identification number a refers to a program. If yes, the number of times that the program has been executed by participants in the input mode is read from file 5-2 in step S18-4. In step S18-5, it is determined whether or not the above described number of times exceeds the limited number of inputs specified by the file identification number a. If yes, the process is terminated. If no, the program is executed in the input data mode in step S18-3. On completion of the execution of the program, the number of times that execution has been performed by participants is incremented by one and stored in file 5-2, Thus, by adding steps S18-4 through S18-6, the number of executions the program performed in the data input mode can be limited, preventing the unnecessary execution of the program in the data input mode, for example.

In the read process shown in Figure 13, the message is actually stored in file 5-3 and displayed as if it were stored in file 5-1. Obviously, the present invention is not limited to this application.

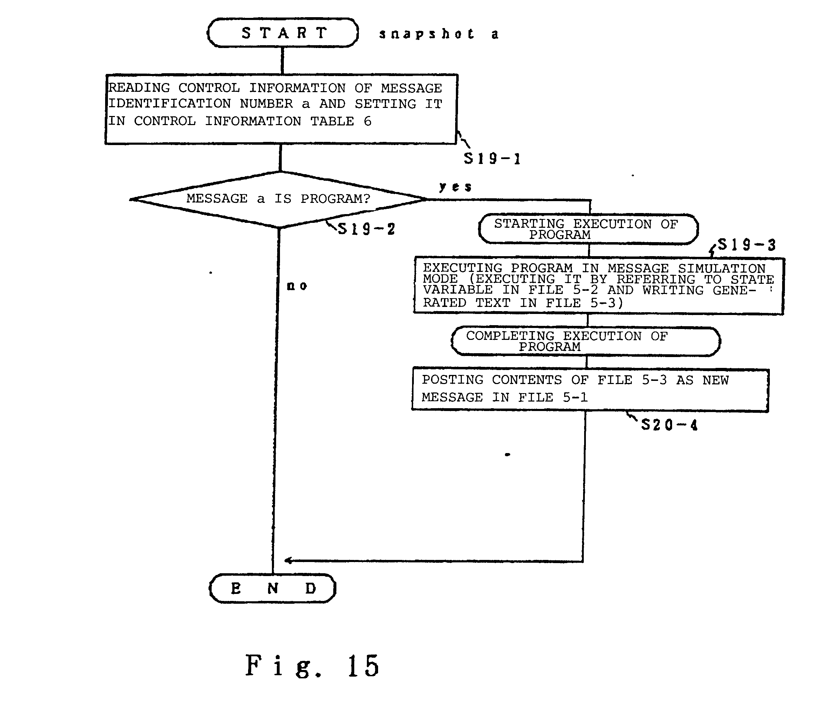

Figure 15 is a process flowchart of a snapshot command to post in file 5-1 the result of the program in file 5-1 as a new message. If the "snapshot a" command is started, the control information of the message having the message identification number a is read in step S19-1, and set in the control information table 6. Then, in step S69-2, it is determined whether or not the message having the message identification number a refers to a program. If no, the process is terminated. If yes, the program is executed in the message simulation mode in step S19-3. The processes are so far similar to those shown in Figure 13.

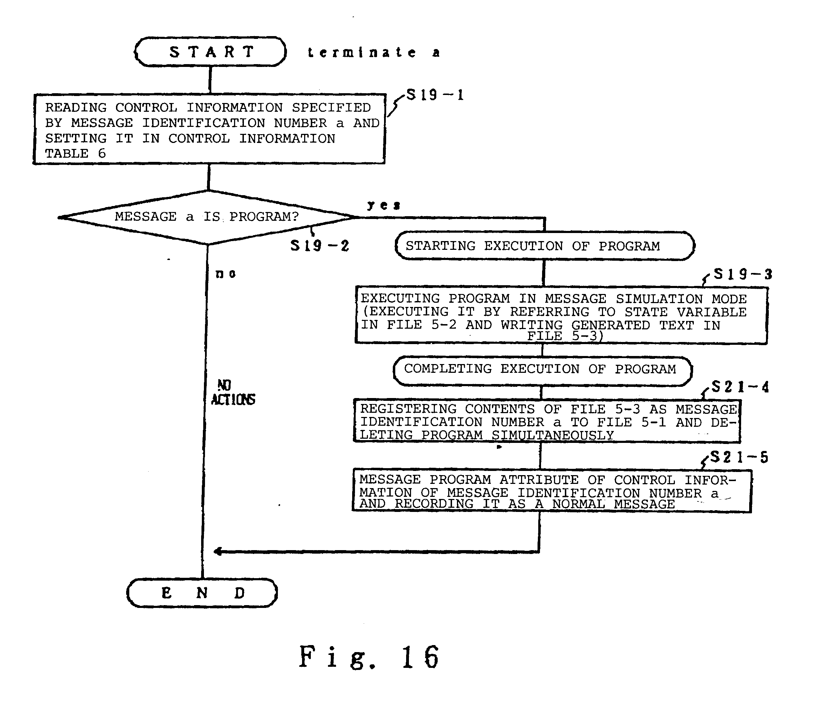

Next, the process of posting the contents of the file 5-1 as a new message is performed in step S20-4. The result of the process shown in Figure 13 is stored in File 5-3, and displayed in step S19-4 as if it were a normal message. By contrast, in the process in step S20-4 shown in Figure 15, the generated file is posted as a message in file 5-1. Furthermore, in place of the process in step S20-4, the result of the message simulation performed at any time is posted as a normal message at the position where the program is stored, that is, in the area of the file storing the program, and then the program can be deleted. Figure 16 is a flowchart of these processes. The "terminate a" command executes a program posted at the position specified by the message identification number a in the message simulation mode, the result is posted at the same position as a normal message, and then the program is deleted. At this time, the processes are performed as shown in Figure 13 up to the process in step S19-3. After the process of step S19-3, the process of step S21-4 is performed.

In step S21-4, the contents of file 5-3 are stored in file 5-1, and the program is simultaneously deleted. In step S21-5, the program attribute of the control information of the message having the message identification number a is deleted, and the message a is stored as a normal message.

Various processes such as an aggregate process or the like, can be performed according to the above described operation.

If the program is written for an interpreter, etc. the source program in the message having the message identification number a is executed in the interpreter mode in step S19-3. This is not limited to the interpreter mode. If the program specified by the message identification number a is an executable program, it is loaded and executed when the command is received.

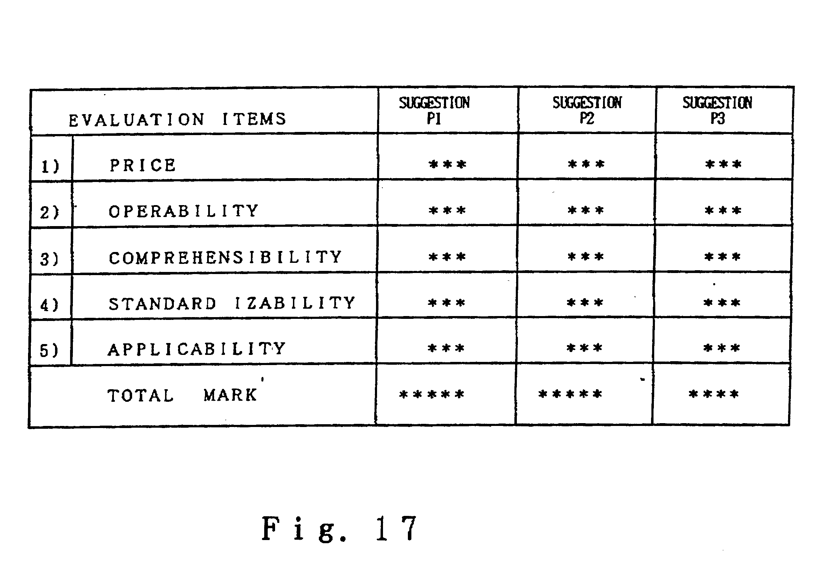

The aggregate of votes, etc. is described above, but a more complicated quantitative evaluation can also be realized. Figure 17 is an aggregate result table based on the aggregate program. In Figure 17, * indicates a numerical value. Figure 17 is a table in which each participant determines his own evaluation on three suggestions P1, P2, and P3 in price, operability, comprehensibllity, standardizabillty, and applicability, and records a mark for each of these evaluation items. A total mark is outputted for each of the suggestions P1 through P3, and the suggestion acquiring the highest mark is selected. Thus, a rather complicated quantitative decision making method is successfully realized by this program.

In this case, an evaluation entry message is provided by the executable program. When the program is started, the message is displayed immediately. A participant reads the message, specifies a command in the specific data input mode (stored in the program), and starts the entry. The participant sequentially enters a mark for each of the five evaluation items for each of the three suggestions. Thus, the participant finishes the evaluation process. After the evaluation process is closed and the aggregate process is performed, the message as shown in Figure 17 is automatically generated.

As described above, various aggregating ortotaling operations are performed and outputted as messages in an electronic conference system so that the conference proceeds efficiently. In additions, a secret vote can be realized to protect the privacy in the conference.

If a conclusion is required at the end of the argument in a conference, it can be reached after a discussion among the participants and an aggregate obtained from all the participants, by, a secret vote, for example. The conventional methods of storing messages and exchanging them among participants cannot obtain such a practical effect. By contrast, according to the present invention, a quantitative decision making system through a secret vote, etc. can be set at any point in a conference if necessary, and the result can be posted as a normal message in the conference. As a result, the conference only involves normal messages posted and stored. Since this enables various data processes for quantitatively aggregating the opinions of participants to be applied effectively and efficiently to the electronic conference, the present invention is very effective in managing an electronic conference requiring a decision making result.

Next, the operation of an electronic conference using attribute or mask-based identifiers according to the embodiment of the present invention is explained below.

The participant 1 uses an attribute identifier (ID) in calling the host 4 through the terminal 2, and selects an electronic conference, a service of the computer system. Then, the participant 1 selects one of a plurality of electronic conferences in the electronic conference service according to the information transmitted from the host 4 to the terminal 2. The processes up to this point have been described previously.

Next, the host 4 refers to the group identification information table 7 according to the ID of the participant 1, and recognizes the name of the group to which the participant belongs. If the participant 1 does not belong to any group in the electronic conference, he should select a group and post it as group identification information. The host 4 reads, according to the group information, the selection information of "attributes" from the control information table 8 in which the participant 1 can select one attribute in the group where he belongs, sends it to the terminal 2, and displays it thereon. According to the display, the participant is informed of the probable information to be read, and of the position at which messages such as opinions, etc. should be outputted. The embodiment of the present invention has two control information tables 6 and 8. The control information table 6 stores control information about messages, while the control information table 8 stores attribute information.

When the participant 1 sends a message, he selects one "attribute" from the displayed choices, and inputs the title and the message text of the message. If the message to be sent is a comment on an existing, then the identification number of the message is inputted.

When the host 4 receives the information inputted by the terminal 2, it stores in file 5-1 the title of the message, the identifier of the selected attribute, the identification number of the commented message, the participant's identifier (ID), and the message identification number of the current message. If the current message is not a comment, then the message identification number of the commented-on message is not required. If the participant 1 sends a plurality of messages, then an attribute is selected each time one message is sent. Since a participant selects an attribute each time he posts a message, he can post a plurality of messages as if they were from different participants in an electronic conference. However, he is only allowed to post a message with an attribute permitted for his group, and he must use another ID, etc. if he posts in a different group.

Since the host 4 recognizes the "attribute" identifier of the message to be read by referring to the control information table 8 according to the name of the group to which the participant 1 belongs, the host 4 sends to the terminal 2 the information list of message identification numbers and the message titles only for the message assigned an "attribute" identifier permitted to be read when requested by the terminal 2 (or when the communication has started). According to the information list displayed on the terminal 2, the participant 1 selects and inputs a message identification number to be referred to. Then, the text of the specified message is extracted from the file 5, sent to the terminal 2, and displayed thereon.

When the information in the above described list is displayed, only messages permitted to be read according to the information indicating the permission/rejection for a read are displayed if specific information is determined depending on whether the current message is independent in the control information table 8 or is a comment on a message previously issued by the current participant, that is, a comment on a message issued previously and posted in file 5-1.

If a message identification number of a commented message is recorded in each of the messages stored in file 5-1, the above described control information indicating the link is used to find the commented message and its author. For example, if a message having a commented message identification number is retrieved, the participant identifier (ID) assigned to the commented message is referred to, and if the participant identifier matches the identifier (ID) of the currently reading participant, then the message being read is a comment on a message previously posted by the current participant. If these messages only are displayed, comments other than those made by the current participant cannot be read. Thus, the privacy of each participant can be successfully protected. If commented message identification numbers and commenting message identification numbers are stored in the information control table shown in Figure 2, the message having the above described commented message identification number need not be retrieved. That is, the necessary information is obtained by referring to the information control table.

The operation is explained in further detail as follows.

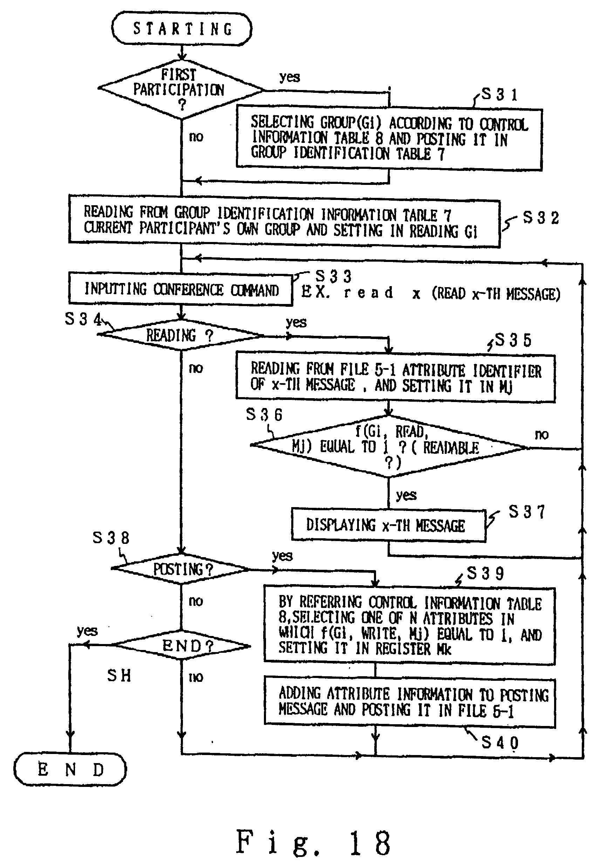

Figure 18 is a flowchart of the operation performed in controlling attributes using attribute identifiers. The operation is started when the participant 1 issues a request to enter an electronic conference. First, in step S30, it is determined whether or not it is the first entry by referring to the control information table 8. If yes, the participant's group (Gi) is selected in step S31 according to the control information table 8, and is posted in the group identification information table 7. If no, or the process of step S31 is completed, the participant's group is read from the group identification information table 7 in step S33, and set in post Gi. Then, in step S33, a conference command is prompted for.

When the conference command is inputted, and if it is a request for reading a message having the message identification number x, that is, read x, then it is determined in step S34 whether or not a read is requested. If yes, the attribute identifier of the message having the message identification number x is read from file 5-1, and set in post Mj in step S35. Then, in step S36, it is determined whether or not f(Gi, read, Mj) is equal to 1, that is, whether or not the message is readable. The embodiment of the present invention is provided with the function f(Gi, read, Mj) of determining whether or not it is readable according to group identification information and attribute identifiers. If it does not return 1, the data are not readable. "Read" in the function f has a value of 1 in a reading operation, while it is 0 in a non-reading operation.

If "1" is determined in step S36, that is, if it is readable (yes), the message having the message identification number x is displayed in step S37. If it is not readable (no in step S36), or if the process of step S37 is completed, then control is returned again to the process of step S33.

If a read process is not specified (no in step S34), then it is determined in step S38 whether or not a message is to be posted. If (yes) is obtained in step S38, then the control information table 6 is referred to in step S39, and one of the n attributes which indicates "1" for the function f(Fi, write, Mj) is selected and set in attribute information Mk. Then, in step S40, the attribute information Mk is added to the posted message, and posted in file 5-1.

If it is determined that a message is not to be posted, then it is determined whether or not the process is terminated in step S41. If no, or if the process of step S40 is completed, then control is returned to step S33 again. If yes, then the process is terminated. In the flowchart, f(Gi, rea, Mj) and f(Gi, write, Mj) show group Gi, process read, mask Mj and Group Gi, process write, mask Mj, respectively. attribute control process using attribute identifiers according to the present invention is described above. It is now explained in further detail, by referring to an actual example, how the above described function f is generated on the table.

Various types of conferences can be served by varying the control information table of the above described electronic conference system. The following two examples are explained as conference services (electronic conferences).

### 1. Electronic Conference as debate

A debate is a discussion in which participants argue a specific subject in a supporter group or opponent group. A judge determines the winner group in the discussion.

In this case, participants belonging to a supporter group or an opponent group can view a message open to all participants (group representative message) and a message closed to the other group (message used for group discussion). The judge can view open messages only.

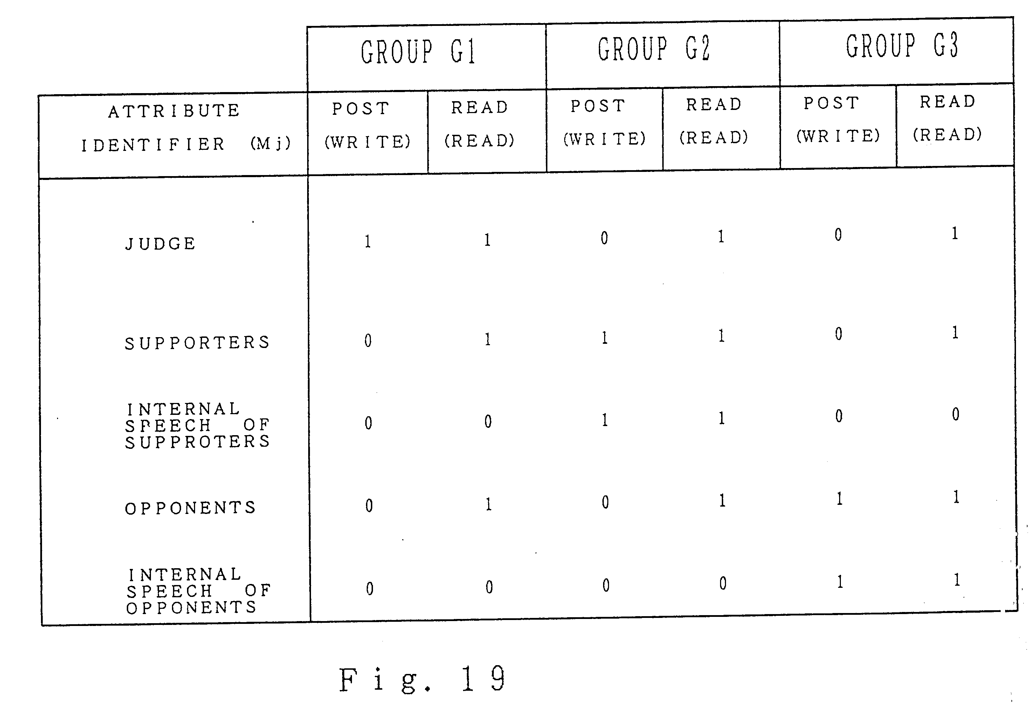

Figure 19 shows an example of the control information table 8 used in realizing such a debate with an electronic conference system.

To realize a debate, three groups G1 through G3 are defined first. All participants belong to one of these groups. The attributes assignable to the participants are "judge", "supporter", "internal message of supporters", "opponent", and "internal message of opponents". According to the control information table shown in Figure 19, the participants belonging to group G1 can use an attribute "judge" when posting a message (having it written in file 5-1), but cannot use the other attributes. When reading messages, they can read a message posted under the attributes "judge", "supporter", and "opponent", but cannot read one posted under the other attributes.

The participants belonging to group G2 can post a message with attributes "supporter" and "internal message of supporters", and read a message posted with attributes "judge", "internal message of supporters", and "opponents". Especially, since a message posted with the attribute "internal message of supporters" can be read only by the participants belonging to group G2, the message cannot be viewed by the participants belonging to the other groups. Therefore, it can be used in exchanging opinions in group G2.

The participants belonging to group G3 can post a message with attributes "opponent" and "internal message of opponents", and read a message posted with attributes "judge", "supporter", "opponent", and "internal message of opponents". The participants belonging to group G3 exchange their opinions in the group under attribute "internal message of opponents"

That is, a message posted by the participants belonging to groups G2 and G3 can be open to the opposing group and group G1 only if it is made under attributes "supporter" and "opponent". The participants belonging to group G1 can view messages posted by supporters and opponents.

### 2. Electronic Conference in a classroom

An electronic conference in a classroom realizes the communications between a teacher and students in an electronic conference.

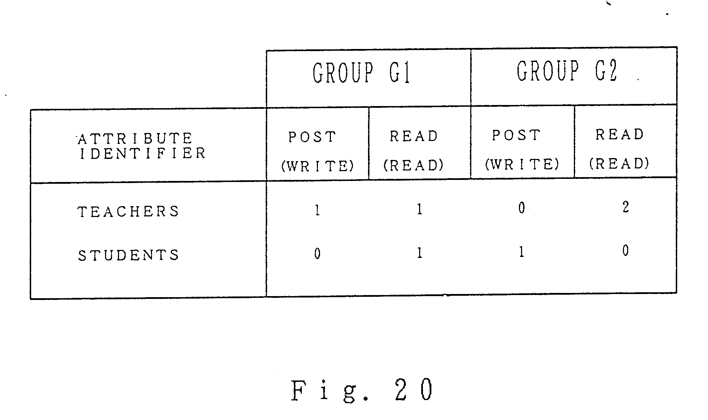

Figure 20 shows a control information table used in the present embodiment. According to the control information table 8, two groups are defined in an electronic conference, together being called "a class". In a class, a teacher belongs to group G1, while students belong to group G2.

In the above described class, a participant belonging to group H1 can post a message as a "teacher", and read messages of the "teacher" and "students".

A participant belonging to group H2 can post a message as a "student", and read a message of the "teacher", where the control information shows "2" indicates that only the teacher's comments on a student's own previous messages, or the teacher's independent messages can be read by the student as readable messages of the "teacher".

When a participant belonging to group H1 posts a message, identification information indicating whether the message is issued to all "students" (independent message) or is a comment on a message previously posted by a student is assigned to the message (if it is a comment, it is also assigned the information identifying with which message the comment is associated). According to the identification information, a student can read the teacher's independent messages and comments on his own messages made previously.

With the above described configuration, if a "teacher" posts a message as a comment on a "student" when the "student" personally asks the "teacher" a question, then students other than the questioner cannot read the answer from the "teacher", thereby protecting the questioner's privacy.

If the control information indicates "3" instead of "2", then the read right is further limited such that a "teacher" can read only the comments on the student's question, and cannot read independent massages.

First, according to the present invention, as described above, the links among a plurality of messages posted to an electronic conference, that is, the relationships among the contents of comments can be correctly represented as systematic links. Thus, the participants in the conference can read comments in the process of the conference or by tracing the process backwards. Since a number of messages posted to an electronic conference can be replaced with a summary message, the number of messages to be normally read can be gradually decremented. Nevertheless, each of the original messages is stored as is, and can be read if necessary. Accordingly, a number of opinions can be appropriately summarized to reach a conclusion in the conference which can be efficiently operated, and it is easy to have participants join midway in the process of the conference.

Second, the present invention can optionally provide a quantitative decision making method such as a secret vote at any time during a conference. Since the final result of the process can be posted as a normal message in the conference, the electronic conference eventually has records of normal messages posted and stored as in the conventional methods. Furthermore, the present invention effectively and efficiently applies to an electronic conference various data processes for determining the totality of participants' opinions in the conference.

Third, the present invention makes a number of participants in a conference belong to a plurality of groups, and defines an "attribute" selected for each group. Since a message can be associated with an "attribute", messages posted by a single participant can be processed as originating from different participants in a conference, by using different "attributes". Conversely, messages posted by different participants can be processed as if posted made by a single participant. This enables an electronic conference system to be operated in various group communication configurations with a poster's privacy successfully protected by appropriately determining control information.

## Claims

1. An electronic conference system for storing in a file in a computer system messages from a plurality of participants in a conference and operating the conference in a message storing and exchanging method by obtaining the contents of said stored messages from a plurality of terminals, said system comprising:
control information storing means for storing message link information which is inputted when storing a message and indicates that a linked-from message is associated with more than one existing linked-to messages, and
read control means for reading said messages according to said message link information stored in said control information storing means.

2. The electronic conference system according to Claim 1, wherein
said control information storing means further stores control information for identifying whether each of said stored messages is a comment on one of the messages posted in said file, or is an independent contribution made independently of other messages.

3. The electronic conference system according to Claim 1, wherein
when a request to read the linked-from message whose link is defined by said message link information is issued, said read control means reads the linked-to message linked from said linked-from message together with said linked-from message.

4. The electronic conference system according to Claim 3, wherein
said linked-from message defined in said message link information is a summary of one or a plurality of posted messages.

5. The electronic conference system according to Claim 3, wherein
among posted messages defined according to said message link information, said read control means prohibits a direct reading of a plurality of linked-to messages linked from a linked-from message, and allows an indirect reading of said their linked-to message indirectly specified by a read of its linked-from message.

6. The electronic conference system according to Claim 5, wherein
said read control means sets a control flag for controlling whether or not said direct reading is prohibited, thus controlling said direct reading using said flag.

7. The electronic conference system according to Claim 1, wherein
when a plurality of linked-from messages are defined as having a link relationship, said read control means reads said linked-from message together with said linked-to message if a read request for said linked-to message is ussued.

8. The electronic conference system according to Claim 1, wherein
a program generated for an object process is stored in said file in which said messages are stored, and
said read control means controls the execution of said stored program when a request to read said file storing said program is issued.

9. The electronic conference system according to Claim 8, wherein
said program performs computation on data inputted by participants, and outputs the result of said computations as the information about read messages.

10. The electronic conference system according to Claim 9, wherein
said data input by participants comprises data obtained by storing in the systems voting data which is provided by executing a voting program upon a participant's inputting a command.

11. The electronic conference system according to Claim 9, wherein
said data inputted by participants contain at least identifiers of said participants, and
said program processes data having a specific identifier is processed by said program less than a predetermined number of times.

12. The electronic conference system according to Claim 8, wherein
the result obtained by executing said program is stored in said file as a message.

13. The electronic conference system according to Claim 12, wherein
the result obtained by executing said program is stored in the file in which said program is stored.

14. An electronic conference system for storing in a file in a computer system messages from a plurality of participants in a conference and operating the conference in a message storing and exchanging method by obtaining the contents of said stored messages from a plurality of terminals, said system comprising:
attribute information storing means for storing a plurality of groups to which participants belong and attribute identifiers added to messages for identifying virtual attributes of participants who send messages,
control information storing means for storing control information containing attribute identifiers to be selected when participants of their own group post messages and information for determining whether or not a read of a message is permitted according to an attribute identifier added to a message when a participant tries to read a message posted by another participant belonging to the same group, and
control means for determining whether or not a participant is permitted to post or read a message according to said control information.

15. The electronic conference system according to Claim 14, wherein
said control information storing means further stores control information for identifying whether each of said stored messages is a comment on one of the messages stored in said file, or it is an independent contribution made independently of other messages.
